(19) Europäisches Patentamt / European Patent Office / Office européen des brevets

(11) **EP 2 183 500 B1**

(12) **FASCICULE DE BREVET EUROPEEN**

(45) Date de publication et mention de la délivrance du brevet:
**16.07.2014 Bulletin 2014/29**

(21) Numéro de dépôt: **08829390.7**

(22) Date de dépôt: **21.07.2008**

(51) Int Cl.:
***F16D 48/06*** *(2006.01)*

(86) Numéro de dépôt international:
**PCT/FR2008/051374**

(87) Numéro de publication internationale:
**WO 2009/030848 (12.03.2009 Gazette 2009/11)**

(54) **DISPOSITIF ET PROCEDE DE DETERMINATION D'UNE CARTOGRAPHIE DU COUPLE TRANSMIS PAR UN EMBRAYAGE EQUIPANT UN VEHICULE AUTOMOBILE ET SYSTEME D'ASSISTANCE A UN DEMARRAGE EN COTE D'UN VEHICULE AUTOMOBILE EQUIPE D'UN TEL DISPOSITIF**

VORRICHTUNG UND VERFAHREN ZUM ERMITTELN EINER KARTOGRAPHIE EINES VON EINER KUPPLUNG ÜBERTRAGENEN DREHMOMENTS UND SYSTEM ZUR UNTERSTÜTZUNG DES ANFAHRENS AN EINER STEIGUNG EINES KRAFTFAHRZEUGES

DEVICE AND METHOD FOR DETERMINING A MAPPING OF THE TORQUE TRANSMITTED BY A CLUTCH IN AN AUTOMOBILE AND HILL-START ASSISTANCE SYSTEM FOR AN AUTOMOBILE EQUIPPED WITH SUCH DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.08.2007 FR 0757287**

(43) Date de publication de la demande:
**12.05.2010 Bulletin 2010/19**

(73) Titulaire: **Renault s.a.s.**
**92100 Boulogne-Billancourt (FR)**

(72) Inventeurs:
• **MONTI, Allessandro**
**F-92250 La Garenne Colombes (FR)**
• **POTHIN, Richard**
**F-78760 Jouars-Ponchartrain (FR)**
• **DESFRICHES, Christophe**
**F-27120 Pacy-sur-Eure (FR)**

(56) Documents cités:
**EP-A- 1 630 442     EP-A- 1 679 450**
**FR-A- 2 828 450     US-A1- 2006 142 120**

EP 2 183 500 B1

**Description**

La présente invention concerne le domaine de l'assistance à la conduite, et notamment au démarrage ou mise en mouvement du véhicule.

L'estimation de la courbe d'embrayage, ou plus précisément d'une cartographie du couple transmis par un embrayage équipant un véhicule automobile, peut servir à divers systèmes embarqués à bord d'un véhicule automobile, et notamment à un système d'assistance à un démarrage en côté d'un véhicule automobile.

La demande de brevet français N° 2 828 450 (Renault) concerne un dispositif d'assistance au démarrage en côte pour un véhicule automobile. Le dispositif d'assistance comprend principalement un moyen d'estimation de pente dans laquelle le véhicule est positionné, un moyen pour interpréter les actions du conducteur, un moyen pour déterminer une courbe caractéristique d'embrayage du véhicule et un moyen pour désactiver automatiquement un moyen de freinage du véhicule. Le véhicule automobile peut ainsi être maintenu en position dans une pente dans un état dans lequel les roues motrices sont débrayées du moteur, et peut être mis en mouvement dans le sens de la montée de la pente par les seules actions du conducteur sur les pédales d'accélérateur et d'embrayage, sans que le conducteur ait à agir sur le frein de parking. Le dispositif d'assistance commande le relâchement du freinage dès que le couple transmis aux roues est suffisant pour compenser l'effort sur le véhicule dû à la pente et à la gravité.

Un dispositif selon le préambule de la revendication 1 est connu du document EP-A-1 630 442.

La cartographie du couple transmis par un embrayage équipant un véhicule automobile est, de manière classique, mise à jour lorsque le véhicule est en roulage, au moyen de seuils de position prédéterminés et invariants.

Aussi, une mauvaise prédétermination de ces seuils peut entraîner une mise à jour incorrecte, voire même une absence de mise à jour de la cartographie du couple transmis par l'embrayage.

En outre, il est possible que les seuils prédéterminés soient adaptés à la mise à jour de la cartographie lorsque l'embrayage est neuf, mais deviennent inadaptés à partir d'une certaine usure de l'embrayage.

Un but de l'invention, est d'améliorer la précision de la mise à jour de la cartographie du couple transmis par l'embrayage avec l'usure de l'embrayage.

Un autre but de l'invention est de fournir un système d'assistance à un démarrage en côte d'un véhicule automobile ayant une précision de fonctionnement améliorée.

Selon un aspect de l'invention, il est proposé un dispositif de détermination, lors du roulage d'un véhicule, d'une cartographie du couple transmis par un embrayage équipant le véhicule automobile en fonction de la position d'un organe de commande de l'embrayage. Le dispositif est défini dans la revendication 1.

Ainsi, il est possible, de manière cyclique, après un nombre prédéterminé de mises à jour complètes de la cartographie d'embrayage, de recalculer ou mettre à jour les seuils de position.

D'après l'invention, lesdits moyens de mise à jour comprennent un comparateur de la valeur courante dudit compteur avec une valeur prédéterminée.

Cette valeur prédéterminée correspond au nombre de mises à jour complètes de la cartographie effectuées successivement avant de modifier les seuils de position de la pédale d'embrayage.

D'après l'invention, les moyens de mise à jour sont adaptés pour exécuter les moyens de calcul lorsque le comparateur détermine que la valeur courante dudit compteur est égale à ladite valeur prédéterminée.

Ainsi, outre le fait que la courbe d'embrayage dépende des seuils, les seuils également dépendent de l'évolution de la courbe d'embrayage. En d'autres termes, la courbe d'embrayage et les seuils sont interdépendants. L'organe de commande de l'embrayage peut être une pédale d'embrayage.

Dans un mode de réalisation, les seuils de position comprennent un seuil haut, un seul bas, et un seuil intermédiaire.

La position de l'organe de commande de l'embrayage, généralement une pédale d'embrayage, peut être définie en pourcentage de la course de la pédale d'embrayage, avec 0 % correspondant à la pédale d'embrayage enfoncée au maximum, c'est-à-dire l'embrayage complètement débrayé, et 100 % correspondant à la pédale d'embrayage non enfoncée ou complètement relâchée, c'est-à-dire l'embrayage complètement embrayé.

Le seuil haut correspond à un seuil de position de la pédale d'embrayage au dessus ou pour lequel on considère l'embrayage complètement embrayé, par exemple 95%. Le seuil bas, par exemple 5%, correspond au seuil de position de la pédale d'embrayage en dessous ou pour lequel on considère que l'embrayage est complètement débrayé. En outre, un seuil intermédiaire, par exemple 80 %, est une valeur pour laquelle on considère l'embrayage non complètement embrayé, et servant à identifier le rapport engagé de la boîte de vitesses. Ainsi, lorsque la position de la pédale d'embrayage est comprise entre le seuil intermédiaire et le seuil haut, l'état de l'embrayage et le rapport de boîte de vitesse déterminé dépend de l'état précédent de l'embrayage, par phénomène d'hystérésis.

Selon un autre aspect de l'invention, il est également proposé un système d'assistance à un démarrage en côte d'un véhicule automobile équipé d'un dispositif de détermination d'une cartographie du couple transmis par un embrayage tel que décrit précédemment, d'un capteur de pente et d'un dispositif de freinage commandé. Le système d'assistance à un démarrage en côte comprend des moyens de commande du dispositif de freinage comprenant des moyens d'estimation du couple à fournir par l'embrayage pour vaincre les forces de gravité, et des moyens de comparaison dudit couple à fournir et du couple fourni par l'embrayage disponible dans ladite cartographie.

Ainsi, le système d'assistance à un démarrage en côte est, d'une précision améliorée, notamment parce qu'il tient compte de l'usure de l'embrayage.

Dans un mode de réalisation, lesdits moyens de commande du dispositif de freinage sont adaptés pour commander le desserrage des freins du dispositif de freinage lorsque le couple fourni par l'embrayage est supérieur ou égal au couple à fournir pour vaincre les forces de gravité.

Ainsi, lors d'un démarrage en côté, le desserrage des freins est géré automatiquement par le véhicule, et le conducteur peut ne s'occuper que de la pédale d'accélération et de la pédale d'embrayage, sans se soucier du frein de parking.

Dans un mode de réalisation, lesdits moyens d'estimation du couple à fournir par l'embrayage pour vaincre les forces de gravité sont adaptés pour calculer ledit couple à fournir à partir de la relation suivante :

$$CT_d = r(b).\rho_{wheels}.m.g.\sin(\theta_{tilt})$$

dans laquelle :

$CT_d$ est le couple à fournir par l'embrayage pour vaincre les forces de gravité, en Nm ;
$r(b)$ est le rapport de boite de vitesse correspondant à la position b du levier de vitesse, adimensionnel ;
$\rho_{wheels}$ est le rayon des roues du véhicule, en m ;
$m$ est la masse du véhicule, en kg,
$g$ est le champs gravitationnel à la surface de la Terre, sensiblement égal à 9,81 m.s$^{-2}$ ; et
$\theta_{tilt}$ est l'inclinaison de la surface sur laquelle se trouve le véhicule, fournie par le capteur de pente, en rad.

Selon un autre aspect de l'invention, il est également proposé un procédé de détermination d'une cartographie du couple transmis par un embrayage selon la revendication 6.

L'invention sera mieux comprise à l'étude de la description détaillée suivante, de quelques modes de réalisation pris à titre d'exemples nullement limitatifs et illustrés par les dessins annexés, sur lesquels :

- la figure 1 est un schéma synoptique d'un dispositif de détermination d'une cartographie du couple transmis par un embrayage équipant un véhicule automobile en fonction de la position d'un organe de commande de l'embrayage, selon un aspect de l'invention ; et
- la figure 2 est un schéma synoptique représentatif d'un système d'assistance à un démarrage en côte d'un véhicule automobile équipé d'un dispositif selon la figure 1.

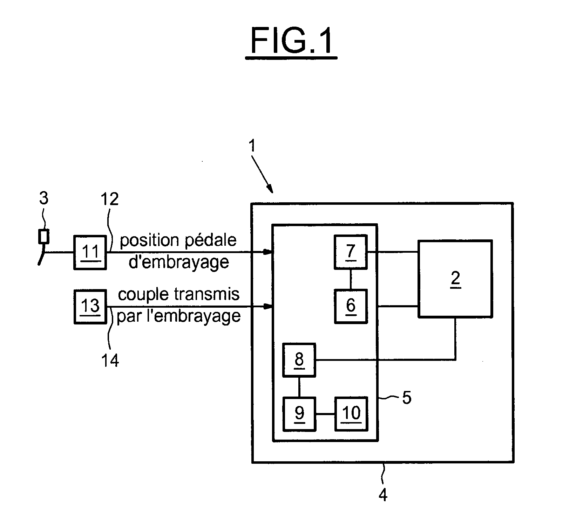

Sur la figure 1, est illustré un exemple de dispositif de détermination, lors de roulage du véhicule, d'une cartographie du couple transmis par un embrayage équipant un véhicule automobile en fonction de la position d'un organe de commande de l'embrayage, en l'occurrence une pédale d'embrayage, selon un aspect de l'invention.

Le dispositif 1 comprend une cartographie 2 du couple transmis par l'embrayage équipant les véhicules automobiles en fonction de la position de la pédale d'embrayage 3 actionnable par le conducteur du véhicule. La cartographie 2 est comprise dans une unité de commande électronique 4 et peut être stockée dans une mémoire. L'unité de commande électronique 4 comprend un module de mise à jour 5 de la cartographie 2. Le module de mise à jour 5 de la cartographie 2 utilise des seuils de position de l'organe de commande de l'embrayage, mémorisés dans un premier module de mémorisation 6.

Le module de mise à jour 5 comprend un module de calcul 7 permettant de modifier les valeurs des seuils de position de la pédale d'embrayage 3 en fonction des valeurs minimale et maximale des positions de la pédale d'embrayage 3 enregistrées dans la cartographie d'embrayage 2, et des valeurs courantes ou actuelles des seuils mémorisés.

Un compteur 8 permet, à tout moment, de connaître le nombre de mises à jour complètes de la cartographie 2 ayant été effectuées depuis la mise en service du véhicule, à partir d'une cartographie 2 initiale prédéterminée. A chaque fois que le module de mise à jour 5 termine une mise à jour complète de la cartographie 2, le compteur 8 est incrémenté d'une unité.

Un comparateur 9 compare la valeur courante du compteur 8 à une valeur prédéterminée $N_{retro}$ mémorisée dans un deuxième module de mémorisation 10. Ainsi, lorsque $N_{retro}$ mises à jour successives de la cartographie 2 ont été effectuées, le module de mise à jour 5 commande au module de calcul 7 de modifier des valeurs des seuils mémorisés dans le premier module de mémorisation 6 en fonction des valeurs minimale et maximale des positions de la pédale d'embrayage 3 enregistrées dans la cartographie d'embrayage 2, et de la valeur courante des seuils actuellement mémorisés dans le premier module de mémorisation 6. Le compteur 8 est alors remis à zéro.

Le module de mise à jour 5 reçoit une information représentative de la position de la pédale d'embrayage 3 par un capteur 11 par l'intermédiaire d'une connexion 12. En outre, un capteur 13 du couple transmis par l'embrayage délivre au module de mise à jour 5, par l'intermédiaire d'une connexion 14, une information représentative du couple transmis par l'embrayage. En variante, le capteur de couple 13 peut être remplacé par un estimateur.

La position de la pédale d'embrayage $\theta_{clutch}$ est exprimée en pourcentages de la course maximale de la pédale d'embrayage 3. Un pourcentage de 0 % correspond à l'embrayage complètement débrayé, c'est-à-dire la pédale d'embrayage 3 enfoncée au maximum, et un pourcentage de 100 % correspond à l'embrayage complètement embrayé, c'est-à-dire la pédale d'embrayage 3 complètement relâchée. Dans la cartographie 2, les valeurs de couple varient entre une valeur de couple minimale et une valeur de couple maximale, et cet intervalle de valeurs de couple est divisé en un nombre prédéterminé de plages $N_{plage}$. Pour chacune des plages de couple, le dispositif, à partir de plusieurs valeurs mesurées dans cette plage, détermine un couple moyen pour la plage i : $CC_i(\theta_{clutch\_CC}(i), ECT_{CC}(i))$.

$\theta_{clutch\_CC}(i)$ représente la position moyenne, en pourcentage, de la pédale d'embrayage 3 pour la plage courante i, et $ECT_{CC}(i)$ représente le couple moyen dans la plage courante i, en Nm.

Un seuil haut $\theta_{clutchHB}$ correspond à une position de la pédale d'embrayage 3 au-delà de laquelle on considère l'embrayage embrayé, c'est-à-dire transmettant du couple, le seuil haut peut par exemple valoir 95 % initialement. Un seuil bas $\theta_{clutchLB}$ est un seuil de position de la pédale d'embrayage 3 en deçà duquel l'embrayage est considéré comme débrayé, c'est-à-dire ne transmettant pas de couple, par exemple égal à 5 % initialement. Un seuil de position intermédiaire $\theta_{clutchLB}$, relativement proche du seuil de position haut $\theta_{clutchHB}$ est également utilisé, par exemple égal à 80 % initialement.

En d'autres termes, les seuils de position sont indexés par rapport à la courbe d'embrayage apprise ou mise à jour. L'évolution des seuils de position doit être beaucoup plus lente que la convergence de l'estimation de la cartographie d'embrayage 2. Par exemple, la valeur des seuils de position peut être mise à jour après $N_{retro}$ mises à jour complètes de la cartographie 2, avec, par exemple, $N_{retro}$ = 30.

Pour le seuil de position bas $\theta_{cluthLB}$, une limite basse $\theta_{clutchLB\_limB}$ et une limite haute $\theta_{clutchLB\_limH}$ peuvent être imposées de manière à ce qu'à tout instant l'équation suivante soit vérifiée :

$$\theta_{clutchLB\_lim B} \leq \theta_{clutchLB}(k) \leq \theta_{clutchLB\_lim H}$$

dans laquelle k représente le nombre de mises à jour des seuils effectuées.

De même pour le seuil de position haut $\theta_{clutchHB}$, une limite basse $\theta_{clutchHB\_limB}$ et une limite haute $\theta_{clutchHB\_limH}$ peuvent être imposées de manière à ce qu'à tout instant l'équation suivante soit vérifiée :

$$\theta_{clutchHB\_lim B} \leq \theta_{clutchHB}(k) \leq \theta_{clutchHB\_lim H}.$$

En outre, les conditions suivantes doivent être satisfaites :

$$\begin{cases} 0 < \theta_{clutchLB\_lim B} < \theta_{clutchLB\_lim H} < 100 \\ 0 < \theta_{clutchHB\_lim B} < \theta_{clutchHB\_lim H} < 100 \\ \theta_{clutchLB\_lim B} < \theta_{clutchHB\_lim H} \end{cases}$$

Il est également possible d'imposer un gabarit de la courbe d'embrayage, c'est-à-dire limiter la différence entre les seuils de position haut $\theta_{clutchHB}$ et bas $\theta_{clutchLB}$ :

$$\Delta\theta_{clutchHBLB\_lim B} \leq \theta_{clutchHB}(k) - \theta_{clutchLB}(k) \leq \Delta\theta_{clutchHBLB\_lim H}$$

dans laquelle :

$$0 < \Delta\theta_{\text{clutchHBLB} \_ \lim B} < \Delta\theta_{\text{clutchHBLB} \_ \lim H} < 100$$

Pour prendre en compte les équations précédentes, il est possible de définir les seuils généraux suivants :

$$\begin{cases} \theta_{\text{clutchLB}\_MIN} = \max\left(\theta_{\text{clutchLB}\_\lim B}, \theta_{\text{clutchHB}}(k) - \Delta\theta_{\text{clutchHBLB}\_\lim H}\right) \\ \theta_{\text{clutchLB}\_MAX} = \min\left(\theta_{\text{clutchLB}\_\lim H}, \theta_{\text{clutchHB}}(k) - \Delta\theta_{\text{clutchHBLB}\_\lim B}\right) \\ \theta_{\text{clutchHB}\_MIN} = \max\left(\theta_{\text{clutchHB}\_\lim B}, \theta_{\text{clutchLB}}(k) + \Delta\theta_{\text{clutchHBLB}\_\lim B}\right) \\ \theta_{\text{clutchHB}\_MAX} = \min\left(\theta_{\text{clutchHB}\_\lim H}, \theta_{\text{clutchLB}}(k) + \Delta\theta_{\text{clutchHBLB}\_\lim H}\right) \end{cases}$$

Ainsi toutes les $N_{\text{retro}}$ mises à jour de la cartographie d'embrayage 2, les seuils de position peuvent être mis à jour par rapport à la valeur minimale $\theta_{\text{clutchCC\_min}}(k)$ et la valeur maximale $\theta_{\text{clutchCC\_max}}(k)$ de la cartographie d'embrayage 2 de sorte que :

$$\begin{cases} \theta_{\text{clutchCC}\_\min}(k) = \min\left(\theta_{\text{clutchCC}}(i)\right) & i \text{ variant de 1 à } N_{\text{plages}} \\ \theta_{\text{clutchCC}\_\max}(k) = \max\left(\theta_{\text{clutchCC}}(i)\right) & i \text{ variant de 1 à } N_{\text{plages}} \end{cases}$$

dans lequel $\theta_{\text{clutchCC}}(i)$ est $i^{\text{ème}}$ point enregistré de la cartographie d'embrayage 2.
A tout instant on a :

$$0 \leq \theta_{\text{clutchLB}}(k) \leq \theta_{\text{clutchCC}\_\min}(k) \leq \theta_{\text{clutchCC}\_\max}(k) \leq \theta_{\text{clutchHB}}(k) \leq 100$$

Les seuils, après leur $k^{\text{ieme}}$ mise à jour, peuvent être calculés à partir de leur valeur avant leur $k^{\text{ieme}}$ mise à jour et après leur k-1 ième mise à jour, au moyen des équations suivantes :

$$\begin{cases} \theta_{\text{clutchLB}}(k) = \min\left[\max\left(\alpha_{\text{clutchLB}} \cdot \theta_{\text{clutchLB}}(k-1) + (1 - \alpha_{\text{clutchLB}}) \cdot \left[\theta_{\text{clutchCC min}}(k-1) - \Delta\theta_{\text{clutchLB}}\right];\right. \\ \qquad\qquad\qquad\qquad \left.\left.\theta_{\text{clutchLB}\_MIN}\right), \theta_{\text{clutchLB}\_MAX}\right] \\ \theta_{\text{clutchHB}}(k) = \max\left[\min\left(\alpha_{\text{clutchHB}} \cdot \theta_{\text{clutchHB}}(k-1) + (1 - \alpha_{\text{clutchHB}}) \cdot \left[\theta_{\text{clutchCC max}}(k-1) + \Delta\theta_{\text{clutchHB}}\right];\right.\right. \\ \qquad\qquad\qquad\qquad \left.\left.\theta_{\text{clutchHB}\_MAX}\right), \theta_{\text{clutchHB}\_MIN}\right] \end{cases}$$

dans lesquelles :

$\alpha_{\text{clutchLB}}$ et $\alpha_{\text{clutchHB}}$ sont des facteurs de convergence des seuils vérifiant :

$$\begin{cases} 0 \leq \alpha_{\text{clutchLB}} \leq 1 \\ 0 \leq \alpha_{\text{clutchHB}} \leq 1 \end{cases}$$

et $\Delta\theta_{\text{clutchLB}}$ et $\Delta\theta_{\text{clutchHB}}$ sont les facteurs d'indexation des seuils de position de la pédale d'accélération 3 par rapport à la courbe d'embrayage vérifiant :

$$\begin{cases} 0 < \Delta\theta_{clutchLB} < 100 \\ 0 < \Delta\theta_{clutchHB} < 100 \end{cases}$$

De manière simplifiée, les facteurs d'indexation peuvent être considérés comme constants. Le seuil de position intermédiaire $\theta_{clutchMB}$ peut être déterminé de manière simplifiée par l'équation suivante :

$$\theta_{clutchMB}(k) = (\theta_{clutchHB}(k) - \theta_{clutchLB}(k)) * 0.8 + \theta_{clutchLB}(k)$$

dans laquelle le seuil de position intermédiaire $\theta_{clutchMB}$ est, par exemple, égal à 80 % de l'intervalle [$\theta_{clutchLB}(k)$, $\theta_{cluchHB}(k)$].

Pour augmenter la rapidité de convergence vers des seuils de position adaptés à la cartographie d'embrayage 2 mise à jour, les facteurs de convergence $\alpha_{clutchLB}$, $\alpha_{clutchHB}$ peuvent varier au cours de l'utilisation du véhicule. Durant les premières rétrogradations ou les premiers kilomètres du véhicule, on peut choisir des grandes valeurs pour les facteurs de convergence $\alpha_{clutchLB}$, $\alpha_{clutchHB}$. Par exemple, on peut choisir $\alpha_{clutchLB} = 1$ et $\alpha_{clutchHB} = 1$ ainsi, la courbe d'embrayage est apprise ou mise à jour avec des seuils constants, par la suite on peut baisser la valeur pour adapter rapidement les seuils de position à la cartographie d'embrayage 2, et enfin on peut passer à la valeur par défaut, inférieure mais très proche de 1, afin de faire évoluer les seuils très lentement au cours de l'utilisation du véhicule.

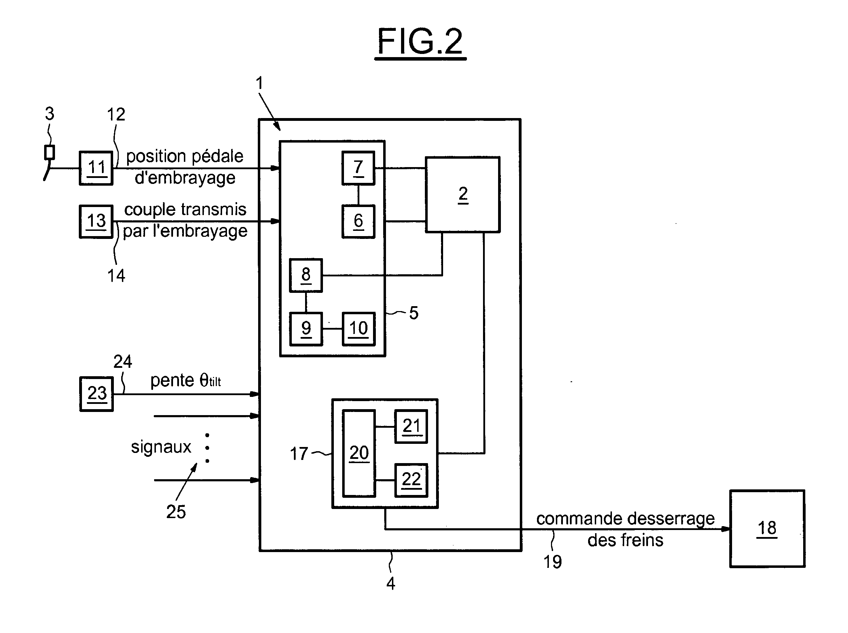

La figure 2 illustre un exemple de système d'assistance à un démarrage en côte ou à une manoeuvre en côte d'un véhicule automobile équipé d'un dispositif 1 de détermination d'une cartographie du couple transmis par un embrayage tel que représenté sur la figure 1.

Le système d'assistance au démarrage en côte comprend, en outre, un module de commande 17, appartenant à l'unité de commande électronique 4, et commandant un dispositif de freinage 18 de manière à desserrer les freins lors d'un démarrage en côte, par une connexion 19, lorsque le couple transmis par l'embrayage compense les effets induits par la pente. Le module de commande 17 comprend un module d'estimation 20 du couple à fournir par l'embrayage pour vaincre les forces de gravité, et un comparateur 21 du couple à fournir pour vaincre les forces de gravité et du couple fourni par l'embrayage disponible dans la cartographie 2. Le module de commande 17 comprend également un module 22 de détermination du rapport de boîte de vitesses correspondant à la position b du levier de vitesses.

Aussi, l'unité de commande électronique 4 reçoit une information représentative de la pente $\theta_{tilt}$ d'un capteur de pente 23, par une connexion 24. L'unité de commande électronique 4 reçoit également une pluralité d'autres signaux 25 fournis par divers capteurs ou estimateurs embarqués à bord du véhicule. Ces signaux sont représentatifs de la valeur de divers paramètres de fonctionnement du véhicule.

Lors d'un démarrage ou d'une manoeuvre en côte effectué par le conducteur du véhicule, le module d'estimation 20 évalue le couple à fournir $CT_d$ aux roues pour démarrer, par la relation suivante :

$$CT_d = r(b).\rho_{wheels}.m.g.\sin(\theta_{tilt})$$

dans laquelle :

$CT_d$ représente le couple à fournir par l'embrayage pour vaincre les forces de gravité, en Nm ;
r(b) représente le rapport de la boîte de vitesses correspondant à la position b du levier de vitesse, adimensionnel ;
$\rho_{wheels}$ représente le rayon des roues du véhicule, en m ;
m représente la masse du véhicule, en kg,
g représente le champ gravitationnel à la surface de la Terre, égal à 9,81 m.s$^{-2}$ ; et
$\theta_{tilt}$ représente l'inclinaison de la surface sur laquelle se trouve le véhicule, fournie par le capteur de pente, en rad.

Pour ce calcul, le module 22 fournit au module d'estimation 20 le rapport de boîte de vitesses correspondant à la position b du levier de vitesses. Le comparateur 21 compare le couple à fournir estimé par le module d'estimation 20, et le couple fourni par l'embrayage dont la valeur est disponible dans la cartographie 2. Lorsque le couple fourni par l'embrayage est supérieur ou égal au couple à fournir estimé par le module d'estimation 20, le module de commande 17 commande le dispositif de freinage 18 de manière à desserrer les freins.

La présente invention permet d'avoir une cartographie d'embrayage mise à jour au cours du temps, tenant compte de l'usure de l'embrayage, et permettant ainsi d'obtenir une cartographie d'embrayage d'une précision améliorée.

L'invention permet, en outre, de fournir une assistance au conducteur pour un démarrage en côte tenant compte de l'usure de l'embrayage, et d'une précision améliorée.

**Revendications**

1. Dispositif de détermination, lors du roulage d'un véhicule, d'une cartographie (2) du couple transmis par un embrayage équipant le véhicule automobile en fonction de la position d'un organe de commande (3) de l'embrayage, ledit dispositif comprenant des moyens de mise à jour (5) de ladite cartographie (2) en fonction de seuils de position de l'organe de commande (3) de l'embrayage, lesdits moyens de mise à jour (5) comprenant des moyens de calcul (7) pour modifier les valeurs desdits seuils en fonction des valeurs minimale et maximale des positions de l'organe de commande (3) enregistrées dans ladite cartographie (2), et de la valeur courante desdits seuils, **caractérisé en ce que** lesdits moyens de mise à jour (5) comprennent un compteur (8) de mises à jour complètes de ladite cartographie (2), un comparateur (9) de la valeur courante dudit compteur (8) avec une valeur prédéterminée, et **en ce que** lesdits moyens de mise à jour (5) sont adaptés pour exécuter lesdits moyens de calcul (7) lorsque le comparateur (9) détermine que la valeur courante dudit compteur (8) est égale à ladite valeur prédéterminée.

2. Dispositif selon la revendication 1, dans lequel lesdits seuils de position comprennent un seuil haut, un seuil bas, et un seuil intermédiaire.

3. Système d'assistance à un démarrage en côte d'un véhicule automobile équipé d'un dispositif de détermination d'une cartographie (2) du couple transmis par un embrayage selon l'une des revendications précédentes, d'un capteur de pente (23) et d'un dispositif de freinage commandé (18), **caractérisé en ce qu'**il comprend des moyens de commande (17) du dispositif de freinage (18) comprenant des moyens d'estimation (20) du couple à fournir par l'embrayage pour vaincre les forces de gravité, et un comparateur (21) dudit couple à fournir et du couple fourni par l'embrayage, disponible dans ladite cartographie (2).

4. Système selon la revendication 3, dans lequel lesdits moyens de commande (17) du dispositif de freinage (18) sont adaptés pour commander le desserrage des freins du dispositif de freinage (18) lorsque le couple fourni par l'embrayage est supérieur ou égal au couple à fournir pour vaincre les forces de gravité.

5. Système selon la revendication 3 ou 4, dans lequel lesdits moyens d'estimation (20) du couple à fournir par l'embrayage pour vaincre les forces de gravité sont adaptés pour calculer ledit couple à fournir à partir de la relation suivante :

$$ CT_d = r(b).\rho_{wheels}.m.g.\sin\left(\theta_{tilt}\right) $$

dans laquelle :

$CT_d$ est le couple à fournir par l'embrayage pour vaincre les forces de gravité, en Nm ; r(b) est le rapport de boite de vitesse correspondant à la position b du levier de vitesse, adimensionnel ;
$\rho_{wheels}$ représente le rayon des roues du véhicule, en m ;
m est la masse du véhicule, en kg,
g est le champs gravitationnel à la surface de la Terre, sensiblement égal à 9, 81 m. $s^{-2}$ ; et
$\theta_{tilt}$ est l'inclinaison de la surface sur laquelle se trouve le véhicule, fournie par le capteur de pente, en rad.

6. Procédé de détermination d'une cartographie (2) du couple transmis par un embrayage équipant un véhicule automobile, en fonction de la position d'un organe de commande (3) de l'embrayage, dans lequel on met à jour, lors du roulage du véhicule, ladite cartographie (2) à partir de seuils de position de l'organe de commande (3) de l'embrayage, **caractérisé en ce que**, lors de ladite mise à jour, on modifie les valeurs desdits seuils en fonction des valeurs minimale et maximale des positions de l'organe de commande (3) enregistrées dans ladite cartographie (2), et de la valeur courante desdits seuils lorsqu'un comparateur (9) de la valeur courante d'un compteur (8) de mises à jour complètes de ladite cartographie (2) avec une valeur prédéterminée, détermine que la valeur courante dudit compteur (8) est égale à ladite valeur prédéterminée.

**EP 2 183 500 B1**

**Patentansprüche**

1. Verfahren zum Ermitteln beim Fahren eines Fahrzeugs einer Kartographie (2) des von einer Kupplung, die das Kraftfahrzeug ausstattet, in Abhängigkeit von der Position eines Steuerorgans (3) der Kupplung übertragenen Drehmoments, wobei die Vorrichtung Aktualisierungsmittel (5) der Kartographie (2) in Abhängigkeit von Positionsschwellenwerten des Steuerorgans (3) der Kupplung aufweist, wobei die Aktualisierungsmittel (5) Rechenmittel (7) aufweisen, um die Werte der Schwellenwerte in Abhängigkeit von den Mindest- und Höchstwerten der Positionen des Steuerorgans (3), die in der Kartographie (2) aufgezeichnet sind, zu ändern, und des aktuellen Werts der Schwellenwerte, **dadurch gekennzeichnet, dass** die Aktualisierungsmittel (5) einen Zähler (8) der vollständigen Aktualisierungen der Kartographie (2), einen Komparator (9) des aktuellen Werts des Zählers (8) mit einem vorbestimmten Wert aufweisen, und dass die Aktualisierungsmittel (5) angepasst sind, um die Rechenmittel (7) auszuführen, wenn der Komparator (9) ermittelt, dass der aktuelle Wert des Zählers (8) gleich dem vorbestimmten Wert ist.

2. Vorrichtung nach Anspruch 1, bei der die Positionsschwellenwerte einen oberen Schwellenwert, einen unteren Schwellenwert und einen Zwischenschwellenwert aufweisen.

3. System zum Unterstützen eines Anlassens auf Steigung eines Kraftfahrzeugs, das mit einer Vorrichtung zum Ermitteln einer Kartographie (2) des von einer Kupplung nach einem der vorhergehenden Ansprüche übertragenen Drehmoments, mit einem Steigungsdetektor (23) und einer gesteuerten Bremsvorrichtung (18) ausgestattet ist, **dadurch gekennzeichnet, dass** es Steuermittel (17) der Bremsvorrichtung (18) aufweist, die Mittel zum Schätzen (20) des von der Kupplung zum Überwinden der Schwerkräfte zu liefernden Drehmoments und einen Komparator (21) des zu liefernden Drehmoments und des von der Kupplung gelieferten Drehmoments, das in der Kartographie (2) verfügbar ist, aufweisen.

4. System nach Anspruch 3, bei dem die Steuermittel (17) der Bremsvorrichtung (18) angepasst sind, um das Lösen der Bremsen der Bremsvorrichtung (18) zu steuern, wenn das von der Kupplung gelieferte Drehmoment größer oder gleich dem Drehmoment ist, das zum Überwinden der Schwerkräfte zu liefern ist.

5. System nach Anspruch 3 oder 4, bei dem die Schätzungsmittel (20) des von der Kupplung zum Überwinden der Schwerkräfte zu liefernden Drehmoments angepasst sind, um das zu liefernde Drehmoment ausgehend von der folgenden Gleichung zu liefern:

$$CT_d = r(b).\rho_{R\ddot{a}der}.m.g\sin(\theta_{Steigung})$$

wobei:

$CT_d$ das Drehmoment ist, das von der Kupplung zum Überwinden der Schwerkräfte zu liefern ist, in Nm, r(b) der Gang des Schaltgetriebes ist, der der Position b des Schalthebels entspricht, adimensional,
$\rho_{R\ddot{a}der}$ den Radius der Räder des Fahrzeugs darstellt, in m,
m die Masse des Fahrzeugs ist, in kg,
g das Gravitationsfeld an der Oberfläche der Erde ist, im Wesentlichen gleich 9,81 m.s$^{-2}$, und
$\theta_{Steigung}$ die Schräglage der Oberfläche ist, auf der sich das Fahrzeug befindet, geliefert von dem Steigungssensor, in rad.

6. Verfahren zum Ermitteln einer Kartographie (2) des von einer Kupplung, die ein Kraftfahrzeug ausstattet, in Abhängigkeit von der Position eines Steuerorgans (3) der Kupplung übertragenen Drehmoments, bei dem man beim Fahren des Fahrzeugs die Kartographie (2) ausgehend von Positionsschwellenwerten des Steuerorgans (3) der Kupplung aktualisiert, **dadurch gekennzeichnet, dass** man bei der Aktualisierung die Werte der Schwellenwerte in Abhängigkeit von den Mindest- und Höchstwerten der Positionen des Steuerorgans (3), die in der Kartographie (2) aufgezeichnet sind, ändert, und des aktuellen Werts der Schwellenwerte, wenn ein Komparator (9) des aktuellen Werts eines Zählers (8) vollständiger Aktualisierungen der Kartographie (2) mit einem vorbestimmten Wert ermittelt, dass der aktuelle Wert des Zählers (8) gleich dem vorbestimmten Wert ist.

8

**Claims**

1. Device for determining, while a vehicle is running, a mapping (2) of the torque transmitted by a clutch fitted to the motor vehicle as a function of the position of a clutch control member (3), said device comprising means (5) for updating said mapping (2) as a function of position thresholds of the clutch control member (3), said updating means (5) comprising computing means (7) for modifying the values of said thresholds as a function of the minimum and maximum values of the positions of the control member (3) recorded in said mapping (2), and of the current value of said thresholds, **characterized in that** said updating means (5) comprise a counter (8) of complete updates of said mapping (2), a comparator (9) of the current value of said counter (8) with a predetermined value, and **in that** said updating means (5) are suitable for executing said computing means (7) when the comparator (9) determines that the current value of said counter (8) is equal to said predetermined value.

2. Device according to Claim 1, wherein said position thresholds comprise a top threshold, a bottom threshold, and an intermediate threshold.

3. System for assisting a hill start of a motor vehicle fitted with a device for determining a mapping (2) of the torque transmitted by a clutch according to either of the preceding claims, with a slope sensor (23) and a controlled braking device (18), **characterized in that** it comprises means (17) for controlling the braking device (18) comprising means (20) for estimating the torque to be supplied by the clutch in order to overcome the forces of gravity, and a comparator (21) of said torque to be supplied and of the torque supplied by the clutch, available in said mapping (2).

4. System according to Claim 3, wherein said means (17) for controlling the braking device (18) are suitable for controlling the release of the brakes of the braking device (18) when the torque supplied by the clutch is greater than or equal to the torque to be supplied in order to overcome the forces of gravity.

5. System according to Claim 3 or 4, wherein said means (20) for estimating the torque to be supplied by the clutch in order to overcome the forces of gravity are suitable for computing said torque to be supplied based on the following relation:

$$CT_d = r(b).\rho_{wheels}.m.g.\sin(\theta_{tilt})$$

in which:

CT$_d$ is the torque to be supplied by the clutch in order to overcome the forces of gravity, in Nm;
r(b) is the gearbox ratio corresponding to the position b of the gearchange lever, adimensional;
$\rho_{wheels}$ represents the radius of the wheels of the vehicle, in m;
m is the weight of the vehicle, in kg;
g is the gravitational field on the surface of the Earth, substantially equal to 9.81 m.s$^{-2}$; and
$\theta_{tilt}$ is the inclination of the surface on which the vehicle stands, supplied by the slope sensor, in rad.

6. Method for determining a mapping (2) of the torque transmitted by a clutch fitted to a motor vehicle, as a function of the position of a clutch control member (3), wherein, while the vehicle is running, said mapping (2) is updated based on position thresholds of the clutch control member (3), **characterized in that**, during said update, the values of said thresholds are modified as a function of the minimum and maximum values of the positions of the control member (3) recorded in said mapping (2), and of the current value of said thresholds when a comparator (9) of the current value of a counter (8) of complete updates of said mapping (2) with a predetermined value, determines that the current value of said counter (8) is equal to said predetermined value.

# FIG.1

EP 2 183 500 B1

# FIG.2

position pédale
d'embrayage

couple transmis
par l'embrayage

pente $\theta_{tilt}$

signaux

commande desserrage
des freins

EP 2 183 500 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2828450, Renault
- EP 1630442 A